# EUROPÄISCHE PATENTSCHRIFT

(11) **EP 1 464 046 B1**
(45) Veröffentlichungstag und Bekanntmachung des Hinweises auf die Patenterteilung: **30.03.2005**
(21) Anmeldenummer: 02806018.4
(22) Anmeldetag: 11.12.2002
(51) Int. Cl.: G10L 19/00, H04N 7/26, H04B 1/66

(54) **SKALIERBARER CODIERER UND DECODIERER FÜR EINEN SKALIERTEN DATENSTROM**
SCALABLE CODER AND DECODER FOR A SCALED DATA STREAM
CODEUR ET DECODEUR MODULABLES POUR UN FLUX DE DONNEES MODULE

(30) Priorität: 10.01.2002 DE 10200653
(43) Veröffentlichungstag der Anmeldung: 06.10.2004
(73) Patentinhaber: Fraunhofer-Gesellschaft zur Förderung der angewandten Forschung e.V., 80636 München (DE)
(72) Erfinder: LINZMEIER, Karsten, 91058 Erlangen (DE); RETTELBACH, Nikolaus, 91054 Erlangen (DE); ALLAMANCHE, Eric, 90425 Nürnberg (DE); GRILL, Bernhard, 91207 Lauf (DE)
(74) Vertreter: Schoppe, Fritz, Dipl.-Ing.
(86) Internationale Anmeldenummer: PCT/EP2002/014079
(87) Internationale Veröffentlichungsnummer: WO 2003/058605

(56) Entgegenhaltungen:
- EP-A- 0 869 622
- WO-A-97/14229
- KOISHIDA K ET AL: "A 16-kbit/s bandwidth scalable audio coder based on the G.729 standard" 2000 IEEE INTERNATIONAL CONFERENCE ON ACOUSTICS, SPEECH, AND SIGNAL PROCESSING. PROCEEDINGS. (ICASSP). ISTANBUL, TURKEY, JUNE 5-9, 2000, IEEE INTERNATIONAL CONFERENCE ON ACOUSTICS, SPEECH, AND SIGNAL PROCESSING (ICASSP), NEW YORK, NY: IEEE, US, Bd. 2 OF 6, 5. Juni 2000 (2000-06-05), Seiten II1149-II1152, XP002162468 ISBN: 0-7803-6294-2
- SKOWRONSKI J: "A nonlinear transform for subband image coding" SIGNAL PROCESSING, AMSTERDAM, NL, Bd. 77, Nr. 3, September 1999 (1999-09), Seiten 289-307, XP004179212 ISSN: 0165-1684

## Beschreibung

Die vorliegende Erfindung bezieht sich auf das Codieren bzw. Decodieren von Informationssignalen und insbesondere auf skalierbare Codierer bzw. skalierbare Decodierer.

Skalierbare Codierer sind in der EP-0 846 375 B1 gezeigt. Allgemein versteht man unter der Skalierbarkeit die Möglichkeit, einen Teilsatz eines Bitstroms, der ein codiertes Datensignal, wie z. B. ein Audiosignal oder ein Videosignal, darstellt, in ein nutzbares Signal zu decodieren. Diese Eigenschaft ist insbesondere dann gewünscht, wenn z. B. ein Datenübertragungskanal nicht die nötige vollständige Bandbreite zur Übertragung eines vollständigen Bitstroms zur Verfügung stellt. Andererseits ist eine unvollständige Decodierung auf einem Decodierer mit niedrigerer Komplexität und damit niedrigeren Kosten möglich. Allgemein werden in der Praxis verschiedene diskrete Skalierbarkeitsschichten definiert.

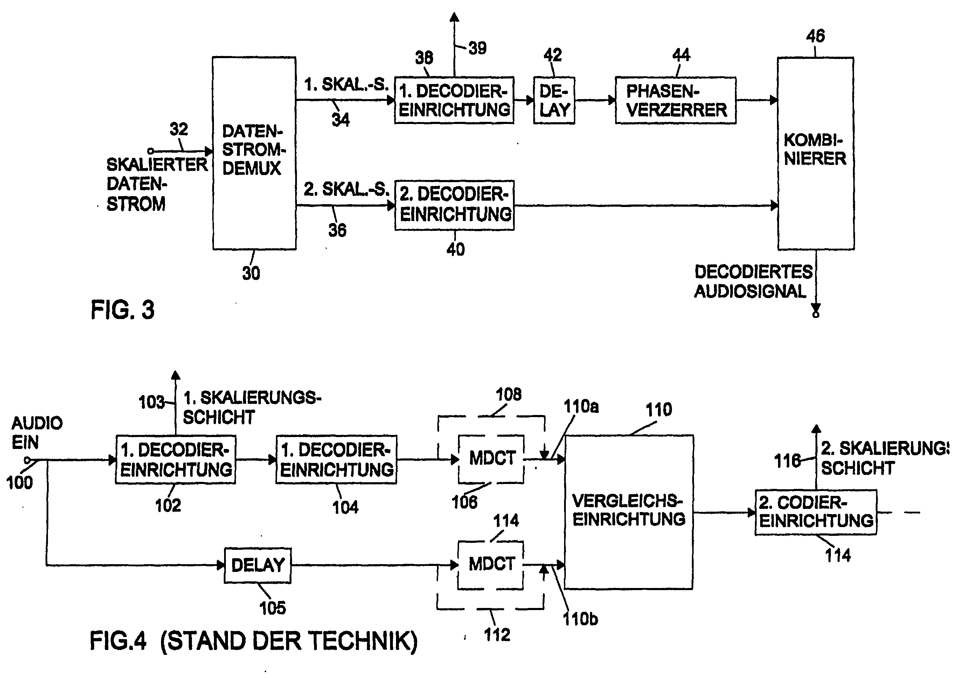

Fig. 4 zeigt den prinzipiellen Aufbau eines skalierbaren Codierers. Ein Informationssignal, wie z. B. ein Audiosignal und/oder ein Videosignal wird an einem Eingang 100 bereitgestellt. Eine erste Codiereinrichtung 102 codiert das Eingangssignal, um eine erste Skalierungsschicht an einem Ausgang 103 der ersten Codiereinrichtung 102 zu erzeugen. Das codierte Signal der ersten Codiereinrichtung wird ferner einer ersten Decodiereinrichtung 104 zur Verfügung gestellt, die ausgebildet ist, um die Codierung wieder rückgängig zu machen, um am Ausgang der ersten Decodiereinrichtung 104 ein codiertes/decodiertes Informationssignal zu erhalten. Optional kann, wie es durch die gestrichelte Umrandung eines Blocks 106 dargestellt ist, das codierte/decodierte Informationssignal z. B. mittels einer MDCT (MDCT = modifizierte diskrete Cosinustransformation) in eine spektrale Darstellung überführt werden. Eine gestrichelte Umwegleitung 108 in Fig. 4 deutet an, daß das codierte/decodierte Eingangssignal auch direkt zu einer Vergleichseinrichtung 110 geliefert werden kann. Die Vergleichseinrichtung 110 umfaßt einen ersten Eingang 110a und einen zweiten Eingang 110b. In den zweiten Eingang 110b wird das Informationssignal ebenfalls eingespeist, wobei eine Umwegleitung 112 verwendet wird, wenn die Umwegleitung 108 im ersten Zweig ebenfalls aktiv war. Wenn dagegen eine spektrale Darstellung in den ersten Eingang 120a eingespeist wird, so wird auf das Informationssignal mittels einer beispielsweise MDCT 114 ebenfalls in eine spektrale Darstellung übergeführt, damit an den beiden Eingängen 110a, 110b der Vergleichseinrichtung 110 gleiche Verhältnisse vorliegen.

Die Vergleichseinrichtung 110 bildet zunächst eine Differenz zwischen dem Signal am ersten Eingang 110a und am zweiten Eingang 110b und vergleicht dann, ob die Differenz zwischen den Signalen an den beiden Eingängen günstiger als das ursprüngliche Informationssignal bzw. das transformierte Informationssignal am zweiten Eingang 110b zu codieren ist. Wenn dies der Fall ist, ist es günstiger, in einer zweiten Codiereinrichtung 114 das Differenzsignal zu codieren, um eine zweite Skalierungsschicht an einem Ausgang 116 der zweiten Codiereinrichtung zu erhalten. Wenn sich dagegen herausstellt, daß das Differenzsignal mehr Bits zur Codierung benötigt als das ursprüngliche Signal, dann würde eine Verarbeitung des Differenzsignals in der zweiten Codiereinrichtung dazu führen, daß eine schlechtere Codiereffizienz als unbedingt nötig erhalten wird. Daher wird in diesem letzteren Fall das Informationssignal direkt zur zweiten Codiereinrichtung 114 durchgeleitet.

In der Technik wird die Arbeitsweise des skalierbaren Codierers von Fig. 4, bei der in der zweiten Codiereinrichtung das Differenzsignal zwischen dem codierten/decodierten Informationssignal und dem ursprünglichen Informationssignal codiert wird, als Differenzbetrieb bezeichnet. Die Betriebsweise, bei der das Differenzsignal bei der Codierung ungünstiger ist als das eigentliche ursprüngliche Informationssignal, wird dagegen als Simulcast-Betrieb bezeichnet. Ein Simulcast-Betrieb ist beispielsweise dann vonnöten, wenn das Informationssignal stark transiente Eigenschaften hat und die erste Codiereinrichtung für transiente Signaleigenschaften ungeeignet ist, so daß ein sehr großer Codierfehler entsteht, der durchaus dazu führen kann, daß das Differenzsignal, das die Vergleichseinrichtung 110 bestimmt, mehr Bits zur Codierung benötigt als das ursprüngliche Informationssignal.

Ein solcher skalierbarer Codierer, wie er in Fig. 4 gezeigt ist, ist beispielsweise im MPEG-4-Standard (ISO/IEC 14496-3:1999 Subpart 4) definiert. Als erste Codiereinrichtung oder Core-Coder kann beispielsweise ein MPEG-CELP-Codierer verwendet werden. Der zweite Codierer ist ein AAC-Codierer, der eine hochqualitative Audiocodierung liefert und im Standard MPEG-2 AAC (ISO/IEC 13818) definiert ist. Falls die erste Codiereinrichtung 102 ein CELP-Codierer ist, ist vor der ersten Codiereinrichtung eine Downsampling-Stufe vorgesehen, und ist nach der ersten Decodiereinrichtung ein Upsampling-Stufe vorgesehen. Ferner kann sowohl vor der ersten Codiereinrichtung als auch vor dem MDCT-Block 114 im zweiten Zweig eine Stufe 105 mit variabler Verzögerung vorgesehen sein, um Zeitsignale zu verzögern, damit die durch die erste Codiereinrichtung und die erste Decodiereinrichtung eingeführte Verzögerung ausgeglichen wird, damit in der Vergleichseinrichtung zueinander korrespondierende Signale am ersten Eingang 110a und am zweiten Eingang 110b verglichen werden.

Die Downsampling-Stufe vor der ersten Codiereinrichtung und die Upsampling-Stufe nach der ersten Decodiereinrichtung im Fall eines CELP-Codierers als Core-Coder dienen dazu, die Abtastrate des Informationssignals am Eingang 100 an die von dem CELP-Codierer geforderte Abtastrate anzupassen und umgekehrt.

Sowohl die erste Skalierungsschicht am Ausgang 103 der ersten Codiereinrichtung als auch die zweite Skalierungsschicht am Ausgang 116 der zweiten Codiereinrichtung werden einem Bitstrom-Multiplexer (in Fig. 4 nicht gezeigt) zugeführt, der einen Bitstrom nach einem Format schreibt, das ebenfalls im MPEG-4-Standard spezifiziert ist.

Es sei darauf hingewiesen, daß die Skalierbarkeit nicht nur für zwei Skalierungsschichten funktioniert, sondern daß prinzipiell beliebig viele Skalierungsschichten vorgesehen sein können, wobei für jede Skalierungsschicht im Codierer eine eigene Codiereinrichtung vorhanden sein muß, und wobei ferner weitere Vergleichseinrichtungen vorgesehen sind, die eine Differenz aus zwei zu vergleichenden "Kanälen" bildet, um einer Codiereinrichtung für eine nächsthöhere Skalierungsschicht Eingangssignale zu liefern.

Der Decodierer zum Decodieren eines skalierten Datenstroms umfaßt zunächst einen Bitstrom-Demultiplexer, um die erste Skalierungsschicht zu extrahieren, und um ferner die zweite Skalierungsschicht zu extrahieren. Die erste Skalierungsschicht wird in eine erste Decodiereinrichtung eingespeist, um eine decodierte erste Skalierungsschicht zu erhalten. Die zweite Skalierungsschicht wird in eine zweite Decodiereinrichtung eingespeist, um eine zweite decodierte Skalierungsschicht zu erhalten. Die beiden decodieren Skalierungsschichten können dann, je nach Implementation entweder im Zeitbereich oder im Frequenzbereich kombiniert werden, um ein decodiertes Audiosignal zu erhalten, das, wenn die Kombination im Frequenzbereich stattfindet, noch in den Zeitbereich transformiert werden muß, um ein zeitliches decodiertes Informationssignal zu liefern.

Je nach Verzögerung zwischen der ersten Decodiereinrichtung und der zweiten Decodiereinrichtung sind im Decodierer ebenfalls Verzögerungsstufen vorgesehen, damit miteinander korrespondierende Signale durch den Kombinierer kombiniert werden.

Prinzipiell kann als erste Codiereinrichtung jeder beliebige Codierer eingesetzt werden. Dies ist gerade ein wesentliches Merkmal bzw. ein wesentlicher Vorteil für das Konzept des skalierbaren Codierers, das dahingehend vielseitig ist, daß die unterschiedlichen Codiereinrichtungen unabhängig voneinander gewählt werden können, da die Beziehung zwischen denselben durch die Vergleichseinrichtung hergestellt wird. So existieren verschiedene Codierer, die als erste Codiereinrichtung eingesetzt werden können, die eine Filterung des Eingangssignals mit sich bringen. Ein einfacher Sprachcodierer, der beispielsweise nur eine Bandbreite von 0 bis 4 kHz verarbeitet, kann eingangsseitig einen Tiefpaß umfassen, der lediglich Frequenzanteile des Informationssignals zwischen 0 und 4 kHz passieren läßt. Ferner benötigen verschiedene Codierer ein Hochpaßfilter, das sicherstellt, daß keine Gleichanteile des Informationssignals in den Codierer eingespeist werden. Das Hochpaßfilter hat somit eine sehr niedrige Grenzfrequenz, die dahingehend ausgelegt ist, daß zwar der Gleichanteil nicht durchgelassen wird, daß jedoch möglichst der gesamte restliche Spektralgehalt des Informationssignals das Filter passieren kann, oder daß zumindest im Fall eines Audiosignals Spektralanteile über z. B. 20 Hz das Eingangs-Hochpaßfilter passieren können.

Filterungen mit einem frequenzselektiven Filter können nicht-lineare frequenzabhängige Phasenverschiebung im Durchlaßband des Filters einführen. So läßt das Filter zwar im idealen Fall den Betrag des Signals im Durchlaßband unangetastet. Jedes Filter hat jedoch einen Frequenzgang hinsichtlich der Phase. Ein beispielhaftes Tiefpaßfilter erster Ordnung hat, wie es bekannt ist, einen Phasengang dahingehend, daß Gleichanteile nahezu nicht phasenverschoben werden, daß jedoch frequenzmäßige Komponenten des Informationssignals zu höheren Frequenzen hin zu negativen Phasen hin verschoben werden, um bei der Grenzfrequenz des Tiefpaßfilters um -45° phasenverschoben zu sein, und um im Sperrband des Tiefpaßfilters bis zu -90° phasenverschoben zu sein. Generell gesagt umfassen somit verschiedene Codierer, die prinzipiell als erste Codiereinrichtung eingesetzt werden können, Filter bzw. sonstige Komponenten, die eine nicht-lineare frequenzabhängige Phasenverschiebung in das durch die erste Codiereinrichtung verarbeitete Informationssignal einführen.

Wenn Fig. 4 betrachtet wird, so zeigt sich, daß in dem Fall, in dem die erste Codiereinrichtung eine nicht-lineare frequenzabhängige Phasenverschiebung mit sich bringt, zwar, wenn entsprechende zeitliche Verzögerungsstufen vorhanden sind, zeitlich zueinander korrespondierende Signale in der Vergleichseinrichtung verglichen werden, daß jedoch das an dem ersten Eingang 110a eingespeiste Signal gegenüber dem an dem zweiten Eingang 110b eingespeisten Signal nicht-linear frequenzabhängig phasenverschoben ist. Diese Phasenverschiebung äußert sich darin, daß das Differenzsignal, das die Vergleichseinrichtung 110 berechnet, erhöht ist, da im anderen Zweig, also dem Zweig, der mit dem zweiten Eingang 110b verbunden ist, keine oder sehr wahrscheinlich eine andere frequenzabhängige Phasenverschiebung aufweist.

Das Differenzsignal ist somit größer als es eigentlich sein müßte, was grundsätzlich die Codiereffizienz insgesamt erniedrigt, da der zweite Codierer 114 zum Codieren eines Signals mit mehr Energie typischerweise auch mehr Bits benötigt. Insbesondere wird die Vergleichseinrichtung aufgrund des vergrößerten Differenzsignals öfters einen Simulcast-Betrieb auslösen, was aus Codiereffizienzgründen nicht vorteilhaft ist. Selbst wenn kein Simulcast-Betrieb ausgelöst wird, da das Differenzsignal immer noch kleiner als das Informationssignal selbst ist, ist das Differenzsignal dennoch bitaufwendiger in der Codierung als es eigentlich sein müßte.

Die Aufgabe der vorliegenden Erfindung besteht darin, ein effizienteres Konzept zum skalierbaren Codieren/Decodieren zu schaffen.

Diese Aufgabe wird durch einen skalierbaren Codierer nach Patentanspruch 1, durch ein Verfahren zum Codieren nach Patentanspruch 10, durch einen Decodierer für einen skalierten Datenstrom nach Patentanspruch 11 oder durch ein Verfahren zum Decodieren eines skalierten Datenstroms nach Patentanspruch 12 gelöst.

Die vorliegende Erfindung basiert auf der Erkenntnis, daß entweder das Eingangssignal in den ersten Eingang der Vergleichseinrichtung oder das Eingangssignal in den zweiten Eingang der Vergleichseinrichtung oder beide Eingangssignale in die Vergleichseinrichtung mittels einer Einrichtung zum Phasenverschieben nachbearbeitet werden müssen, damit die beiden Signale einen insgesamten Phasenunterschied haben, der kleiner als die nicht-lineare frequenzabhängige Phasenverschiebung ist, die durch die erste Codiereinrichtung eingeführt wird. Idealerweise wird die Einrichtung zum Phasenverschieben so implementiert, daß die beiden Eingangssignale in die Vergleichseinrichtung im wesentlichen keinen Phasenunterschied über der Frequenz haben, sondern im wesentlichen phasengleich über allen interessierenden Frequenzen sind. Dieser Fall liefert das kleinstmögliche Differenzsignal und damit die größte Codiereffizienz. Selbst wenn die Einrichtung zum Phasenverschieben jedoch ausgeführt ist, um den durch die erste Codiereinrichtung eingeführten frequenzabhängigen Phasenversatz lediglich zu verringern, wird bereits im allgemeinen eine Erhöhung der Codiereffizienz erreicht, da die Energie des Differenzsignals mit kleiner werdendem Phasenversatz zwischen den beiden Signalen, aus denen die Differenz gebildet wird, verringert wird.

Bei dem ersten Ausführungsbeispiel der vorliegenden Erfindung wird in dem Zweig, in dem sich die erste Codiereinrichtung und die erste Decodiereinrichtung befinden, ein Phasenschieber eingeführt, der auf das codierte/decodierte Informationssignal entweder in zeitlicher Hinsicht wirkt, oder auf die spektrale Darstellung wirkt, um die durch die erste Codiereinrichtung und gegebenenfalls durch die erste Decodiereinrichtung eingeführte Phasenverschiebung zu kompensieren. Bei diesem Ausführungsbeispiel muß in dem Decodierer für einen skalierbaren Datenstrom ebenfalls ein entsprechender Phasenschieber vorgesehen sein.

Bei dem zweiten Ausführungsbeispiel der vorliegenden Erfindung sind keine Decodierermodifikationen erforderlich. Dies wird dadurch erreicht, daß nicht das Signal im ersten Zweig, also das codierte/decodierte Informationssignal nicht-linear phasenverzerrt wird, sondern daß das ursprüngliche Audiosignal im zweiten Zweig, das entweder in seiner zeitlichen Darstellung oder seinen spektralen Darstellungen in den zweiten Eingang der Vergleichseinrichtung eingespeist wird, phasenverzerrt wird, und zwar vorzugsweise genauso phasenverzerrt wie das Signal im ersten Zweig, so daß an den beiden Eingängen der Vergleichseinrichtung wieder gleiche Phasenverhältnisse vorliegen. In diesem Fall muß keine Decodierermodifikation vorgenommen werden, da solche frequenzabhängige Phasenverzerrungen für das menschliche Gehör üblicherweise nicht hörbar sind bzw. annähernd nicht hörbar sind.

Alternativ können in beiden Zweigen Phasenschieber vorgesehen sein, die beide zusammen auf die entsprechenden Signale wirken, um an den Eingängen der Vergleichseinrichtung gleiche Phasenverhältnisse zu erzeugen, indem zwei nichtphasenverzerrte Signale einer Differenzbildung unterzogen werden, oder indem zwei über der Frequenz gleich nicht-linear phasenverzerrte Signale einer Differenzbildung unterzogen werden.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaltbild eines skalierbaren Codierers gemäß der vorliegenden Erfindung;
- Fig. 2: einen Teilausschnitt eines skalierbaren Codierers, bei dem die Phasenverschiebung bzw. Phasenverzerrung im Frequenzbereich durchgeführt wird;
- Fig. 3: ein Blockschaltbild eines erfindungsgemäßen Decodierers für skalierte Datenströme; und
- Fig. 4: einen bekannten skalierbaren Codierer.

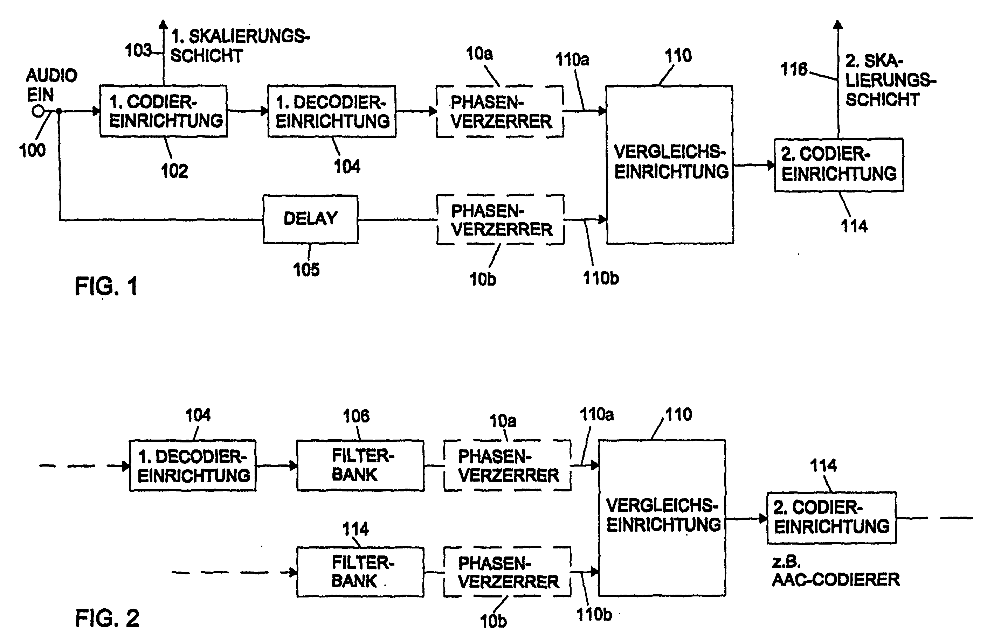

Im nachfolgenden wird auf Fig. 1 eingegangen, um ein Blockschaltbild eines erfindungsgemäßen skalierbaren Codierers darzustellen. Der skalierbare Codierer in Fig. 1 umfaßt eine Einrichtung zum Phasenverzerren, die einen Phasenverzerrer 10a und/oder einen Phasenverzerrer 10b umfassen kann. Der Phasenverzerrer 10a ist bei einem ersten Ausführungsbeispiel der vorliegenden Erfindung so ausgestaltet, um eine durch die erste Codiereinrichtung und/oder erste Decodiereinrichtung eingeführte nicht-lineare frequenzabhängige Phasenverzerrung auszugleichen. Eine solche nicht-lineare frequenzabhängige Phasenverzerrung wird beispielsweise durch ein Tiefpaßfilter, ein Hochpaßfilter, ein Bandpaßfilter etc. erzeugt.

Der Phasenverzerrer 10a kann durch ein Allpaßfilter realisiert werden, dessen Amplitudengang über der Frequenz zumindest im interessierenden Frequenzbereich konstant ist, und dessen Phasengang so gestaltet ist, daß die durch die erste Codiereinrichtung und/oder die erste Decodiereinrichtung eingeführte nicht-lineare frequenzabhängige Verzerrung zusammen mit dem Phasengang des Allpaßfilters (Phasenverzerrer 10a) zusammen optimalerweise gleich 0 für alle interessierenden Frequenzen ist. In diesem Fall wird das optimale Differenzsignal erzeugt, d. h. das Differenzsignal mit der kleinsten Energie am Ausgang der Vergleichseinrichtung 110, das von der zweiten Codiereinrichtung mit der geringstmöglichen Anzahl von Bits codiert werden kann. Eine Verbesserung der Codiereffizienz würde jedoch bereits dadurch erreicht, daß die Phasenverschiebung über der Frequenz betrachtet zwischen dem ersten Eingangssignal, das in den Eingang 110a eingespeist wird, und dem zweiten Eingangssignal, das in den zweiten Eingang 110b der Einrichtung 110 eingespeist wird, kleiner ist als die Phasenverschiebung bzw. Phasenverzerrung, die durch die erste Codiereinrichtung und/oder erste Decodiereinrichtung eingeführt wird.

Bei einem alternativen Ausführungsbeispiel der vorliegenden Erfindung ist der Phasenverzerrer 10a nicht vorhanden, sondern ist lediglich der Phasenverzerrer 10b vorhanden, um das in den zweiten Eingang 110b der Vergleichseinrichtung 110 einzuspeisende Signal einer Phasenverzerrung zu unterziehen. Der Phasengang des Phasenverzerrers 10b ist im optimalen Fall so gewählt, daß er genau gleich dem Phasengang ist, den die erste Codiereinrichtung und/oder die erste Decodiereinrichtung bewirken. In anderen Worten bedeutet dies, daß auch das Informationssignal selbst, das in den zweiten Eingang 110b der Vergleichseinrichtung 110 einzuspeisen ist, möglichst genauso phasenverzerrt wird, wie das Signal im oberen Zweig von Fig. 1, also das Signal, das in den ersten Eingang 110a der Vergleichseinrichtung 110 eingespeist wird. Es sei jedoch darauf hingewiesen, daß auch dann bereits eine Verbesserung der Codiereffizienz erreicht wird, wenn der Phasenverzerrer 10b nicht genau die optimale Charakteristik hat, sondern zumindest eine solche nicht-lineare frequenzabhängige Phasenverzerrung einführt, daß der Phasenunterschied zwischen den Eingangssignalen in die Vergleichseinrichtung 110 kleiner als die eingeführte nicht-lineare frequenzabhängige Phasenverzerrung aufgrund der ersten Codiereinrichtung 102 und/oder der ersten Decodiereinrichtung 104 ist.

Bei einem alternativen Ausführungsbeispiel der vorliegenden Erfindung sind sowohl der erste Phasenverzerrer 10a als auch der zweite Phasenverzerrer 10b wirksam, um zusammen zu bewirken, daß der Phasenunterschied, den die in die Vergleichseinrichtung 110 einzuspeisenden Signale haben, kleiner als die nicht-lineare frequenzabhängige Phasenverzerrung ist, die durch die erste Codiereinrichtung 102 und/oder die erste Decodiereinrichtung 104 eingeführt wird.

Wenn davon ausgegangen wird, daß das in den Eingang 100 von Fig. 1 eingespeiste Informationssignal ein Zeitsignal ist, so findet, wenn die erste Codiereinrichtung 102 ebenfalls ein im Zeitbereich arbeitender Codierer ist, vor der Vergleichseinrichtung keine Transformation in den Frequenzbereich statt. In diesem Fall arbeitet der erste Phasenverzerrer 10a und/oder der zweite Phasenverzerrer 10b im Zeitbereich. Wie es ausgeführt worden ist, können sowohl der erste Phasenverzerrer 10a als auch der zweite Phasenverzerrer 10b als Allpaßfilter und insbesondere als digitales Filter mit der gewünschten Charakteristik aufgebaut werden, was dahingehend unproblematisch ist, da das Informationssignal 100 am Eingang, das beispielsweise ein diskretes Audiosignal ist, ohnehin bereits in digitaler Form vorliegt. Sollte dies nicht der Fall sein, so muß an irgendeiner Stelle vor dem Allpaßfilter (10a, 10b) eine Analog/Digital-Wandlung durchgeführt werden.

Allpaßfilter können jedoch, wie es bekannt ist, auch analog durch entsprechende Kombinationen von LC-Filtern aufgebaut werden, wie es auf dem Gebiet der Filtersynthese bekannt ist.

Alternativ kann, wie es in Fig. 2 gezeigt ist, eine Umsetzung in beiden Zweigen in eine spektrale Darstellung beispielsweise mittels einer Filterbank (106, 114) erreicht werden, und der Phasenverzerrer 10a bzw. 10b können im Frequenzbereich, also auf Spektrallinien wirken. Dieses Ausführungsbeispiel ermöglicht eine direkte Beeinflussung der Spektrallinien. Die Beeinflussungsbeträge der Spektrallinien, um entsprechende Phasenverzerrungen zu realisieren, können dadurch erhalten werden, daß die nicht-lineare frequenzabhängige Phasenverzerrung, die durch die erste Codiereinrichtung und/oder die erste Decodiereinrichtung bewirkt werden, meßtechnisch erfaßt werden und z. B. in einer Tabelle abgespeichert werden. Daraus ist ersichtlich, daß die Phasenverzerrer 10a, 10b nicht unbedingt als analoge oder digitale Filter implementiert werden müssen, sondern auch mittels eines Rechenwerks oder softwaremäßig.

Es sei ferner darauf hingewiesen, daß die nicht-lineare frequenzabhängige Phasenverzerrung, die beispielsweise durch den Phasenverzerrer 10b eingeführt wird, nicht unbedingt nach der zeitlichen Verzögerung 105 eingebracht werden muß, sondern genauso gut vorher dem Signal aufgeprägt werden kann, das in den zweiten Eingang 110b der Vergleichseinrichtung einzuspeisen ist. Dasselbe gilt für den Phasenverzerrer 10a. Falls es möglich ist, kann derselbe auch an einer anderen Stelle in dem oberen Zweig von Fig. 1 plaziert sein. Entscheidend ist, daß ein in den ersten Eingang 110a der Vergleichseinrichtung 120 einzuspeisendes Signal und ein in den zweiten Eingang 110b der Vergleichseinrichtung 110 einzuspeisendes Signal derart "phasenbehandelt" sind, daß der Phasenunterschied derselben über der Frequenz kleiner ist als der Phasenunterschied, der durch die erste Codiereinrichtung 102 und/oder die erste Decodiereinrichtung 104 eingeführt wird. Damit ergibt sich ein Differenzsignal, das bereits kleiner als im Falle einer nicht vorhandenen nicht-linearen frequenzabhängigen Phasenverzerrung ist, was sich unmittelbar in einer besseren Codiereffizienz, d. h. einer geringeren Anzahl von Bits zum Darstellen eines gegebenen Informationssignals, auswirkt.

Wie bereits ausgeführt worden ist, wird in dem Fall, in dem der Phasenverzerrer 10b im unteren Zweig von Fig. 1 vorgesehen ist, keine Decodierer-Modifikation nötig sein. Falls jedoch die Lösung gewählt wird, daß der Phasenverzerrer 10a im oberen Zweig von Fig. 1 vorhanden ist, so ist auch eine entsprechende Modifikation im Decodierer erforderlich, auf die nachfolgend Bezug nehmend auf Fig. 3 eingegangen wird.

Ein Decodierer für einen skalierten Datenstrom umfaßt einen Datenstrom-Demultiplexer 30, um aus einem skalierten Datenstrom 32 eine erste Skalierungsschicht 34 und eine zweite Skalierungsschicht 36 und gegebenenfalls weitere Skalierungsschichten zu extrahieren.

Die erste Skalierungsschicht wird in eine erste Decodiereinrichtung 38 eingespeist, wobei die erste Decodiereinrichtung angeordnet ist, um ein von der ersten Codiereinrichtung (102 in Fig. 1) geliefertes Signal decodieren zu können.

Analog hierzu wird die zweite Skalierungsschicht in eine zweite Decodiereinrichtung 40 eingespeist, die angeordnet ist, um ein Signal, das von einer zweiten Codiereinrichtung (114 in Fig. 1) ausgegeben wird, zu decodieren.

Nachdem die erste Decodiereinrichtung typischerweise weniger Verzögerung erzeugt als die zweite Decodiereinrichtung, ist ferner eine konstante zeitliche Verzögerung nötig, die durch ein Delay-Glied 42 in Fig. 3 dargestellt ist.

Die verzögerte erste Skalierungsschicht wird dann in einen Phasenverzerrer 44 eingespeist, um eine nicht-lineare frequenzabhängige Phasenverzerrung einzuführen, die zu der Phasenverzerrung identisch ist, die durch den Phasenverzerrer 10a von Fig. 1 eingebracht worden ist. Die Phasenverzerrer 44 und 10a können somit mit demselben Phasengang über der Frequenz implementiert werden.

Das Ausgangssignal des Phasenverzerrers 44 wird dann ebenso wie das Ausgangssignal der zweiten Decodiereinrichtung in einen Kombinierer 46 eingespeist. Der Kombinierer addiert die beiden Signale, um ein decodiertes Audiosignal zu ergeben, wenn die Vergleichseinrichtung 110 im Codierer das Differenzsignal zwischen den beiden Eingangssignalen in die Vergleichseinrichtung der zweiten Codiereinrichtung zugeführt hatte. Alternativ wird das Ausgangssignal der zweiten Decodiereinrichtung 40 von Fig. 3 durch den Kombinierer durchgeschaltet, wenn die Vergleichseinrichtung 110 im Codierer sich zu einem Simulcast-Betrieb entschieden hatte.

Die erste Decodiereinrichtung 38 kann einen unmittelbaren Ausgang 39 haben, um ihr Ausgangssignal unmittelbar auszugeben, um in der Lage zu sein, beispielsweise schnell zumindest einen ersten Eindruck aufgrund der ersten Skalierungsschicht von dem in dem skalierten Datenstrom codierten Signal zu erhalten, ohne daß das komplette decodierte Audiosignal bzw. decodierte Informationssignal mit voller Qualität am Ausgang des Kombinierers 46 erhalten wird.

Je nach Codiererimplementation kann eine Umsetzung in den Zeitbereich erst nach dem Kombinierer 46 stattfinden. In diesem Fall muß das Ausgangssignal des Phasenverzerrers vor dem Kombinierer 46 in eine spektrale Darstellung umgesetzt werden. Alternativ könnte jedoch auch das Signal vor dem Phasenverzerrer in eine spektrale Darstellung umgesetzt werden, und der Phasenverzerrer würde dann im Frequenzbereich operieren.

Erfindungsgemäß werden somit die Phasenverläufe der in den verschiedenen Layern oder Skalierungsschichten verarbeiteten Signalanteile aneinander angeglichen. Dies kann zum einen dadurch stattfinden, daß das rekonstruierte Basislayer-Signal einer nachfolgenden Filterung (Phasenverzerrer 10a von Fig. 1) unterworfen wird, dessen Phasengang im relevanten Frequenzbereich vorzeichenverkehrt aber ansonsten annähernd gleich zum Phasengang der Filterungen im Basislayer-Codierer (102 von Fig. 1) verläuft, so daß sich die Phasenverzerrungen in der Summe nahezu aufheben. In diesem Fall sollte sowohl im Codierer als auch im Decodierer eine Filterung mit demselben Phasengang - soweit dies in der Praxis realisierbar ist - stattfinden.

Alternativ kann die Differenzbildung in der Vergleichseinrichtung (110 in Fig. 1) zwischen dem rekonstruierten phasenverzerrten Basislayer-Signal und dem in derselben Weise phasenverzerrten Eingangssignal anstatt mit dem unverzerrten Eingangssignal vollzogen werden. Hierzu wird das Eingangssignal einer Filterung unterworfen, die im relevanten Frequenzbereich vorzeichenrichtig annähernd dieselbe Phasenverzerrung bewirkt wie die Filterung im Basislayer-Codierer. Auch in diesem Fall ist eine Realisierung als Allpaßfilter zur Erhaltung des Betragsspektrums günstig. Die Phasenverzerrung muß in diesem Fall, wie es ausführt worden ist, nur im skalierbaren Codierer vorgenommen werden, da eine Kompensation im Decodierer aufgrund der annähernden Unhörbarkeit von Phasenverzerrungen für das menschliche Gehör entfällt. Damit wird die Codiereffizienz erhöht, da in dem Differenzsignal keine künstlich eingeführten Phasenverzerrungen mehr enthalten sind, so daß sich insgesamt ein Differenzsignal mit kleinerer Energie und damit günstigerer Codierbarkeit ergibt.

## Patentansprüche

1. Skalierbarer Codierer zum Codieren eines Informationssignals, mit folgenden Merkmalen:
einer ersten Codiereinrichtung (102) zum Erzeugen einer ersten Skalierungsschicht aus dem Informationssignal;
einer Decodierereinrichtung (104), die ausgebildet ist, um die erste Skalierungsschicht zu decodieren, um ein codiertes/decodiertes Informationssignal zu erzeugen,
wobei durch die erste Codiereinrichtung (102) und/oder die Decodiereinrichtung (104) eine nicht-lineare frequenzabhängige Phasenverzerrung eingeführt wird, um die das codierte/decodierte Informationssignal gegenüber dem Informationssignal phasenverzerrt ist;
einer Vergleichseinrichtung (110) mit zwei Eingängen (110a, 110b), wobei die Vergleichseinrichtung (110) ausgebildet ist, um ein Differenzsignal aus einem an dem ersten Eingang (110a) anlegbaren Signal und einem an dem zweiten Eingang (110b) anlegbaren Signal zu bilden, wobei das Differenzsignal einer zweiten Codiereinrichtung (114) zum Erzeugen einer zweiten Skalierungsschicht zuführbar ist; und
einem Phasenverzerrer (10a, 10b) zum Phasenverzerren mit einer nicht-linearen frequenzabhängigen Phasenverzerrung, die so gewählt ist, daß ein Phasenunterschied zwischen dem an dem ersten Eingang (110a) anlegbaren Signal und dem an dem zweiten Eingang (110b) anlegbaren Signal kleiner ist als die nicht-lineare frequenzabhängige Phasenverzerrung, die aufgrund der ersten Codiereinrichtung und/oder der Decodiereinrichtung eingeführt wird,
wobei das an den ersten Eingang (110a) anlegbare Signal von einem Ausgangssignal der ersten Codiereinrichtung (102) abgeleitet ist, und wobei das an den zweiten Eingang (110b) anlegbare Signal das Informationssignal oder ein von dem Informationssignal abgeleitetes Signal ist.

2. Skalierbarer Codierer nach Patentanspruch 1,
bei dem der Phasenverzerrer (10a) angeordnet ist, um ein Eingangssignal in die erste Codiereinrichtung und/oder ein Ausgangssignal der ersten Decodiereinrichtung (104) gemäß einem Phasengang phasenzuverzerren, der so gewählt ist, daß er zusammen mit einem Phasengang der nicht-linearen frequenzabhängigen Phasenverzerrung aufgrund der ersten Codiereinrichtung (102) und/oder der ersten Decodiereinrichtung (104) einen resultierenden Phasengang mit einem Wert von im wesentlichen 0 ergibt.

3. Skalierbarer Codierer nach Patentanspruch 1,
bei dem der Phasenverzerrer (10b) angeordnet ist, um das Informationssignal oder ein von dem Informationssignal abgeleitetes Signal gemäß einem Phasengang phasenzuverzerren, der im wesentlichen gleich dem Phasengang der nicht-linearen frequenzabhängigen Phasenverzerrung ist, die durch die erste Codiereinrichtung (102) und/oder die erste Decodiereinrichtung (104) einführbar ist.

4. Skalierbarer Codierer nach einem der vorhergehenden Patentansprüche,
bei dem der Phasenverzerrer als Allpaßfilter realisiert ist, das einen vorbestimmten Phasengang aufweist, und das auf einen Betrag des zu filternden Signals im wesentlichen keinen Einfluß hat.

5. Skalierbarer Codierer nach einem der vorhergehenden Patentansprüche, der ferner folgende Merkmale aufweist:
eine Einrichtung (106) zum Erzeugen einer spektralen Darstellung des codierten/decodierten Informationssignals; und
eine Einrichtung (114) zum Erzeugen einer spektralen Darstellung des Informationssignals oder eines von dem Informationssignal abgeleiteten Informationssignal.

6. Skalierbarer Codierer nach Anspruch 5, bei dem der Phasenverzerrer (10a; 10b) auf eine spektrale Darstellung wirkt.

7. Skalierbarer Codierer nach einem der vorhergehenden Patentansprüche, der ferner folgendes Merkmal aufweist:
eine Einrichtung (105) zum zeitlichen Verzögern des Informationssignals um eine Zeitdauer, die im wesentlichen gleich einer Verarbeitungszeit der ersten Codiereinrichtung (102) und der Decodiereinrichtung (104) ist.

8. Skalierbarer Codierer nach einem der vorhergehenden Patentansprüche,
bei dem die erste Codiereinrichtung (102) auf ein Frequenzband begrenzt ist, und bei dem der Phasenverzerrer (10a; 10b) nur in dem Frequenzband wirksam ist, auf das die erste Codiereinrichtung (102) bandbegrenzt ist.

9. Skalierbarer Codierer nach einem der vorhergehenden Ansprüche,
bei dem das Informationssignal ein Audiosignal aufweist, und bei dem die zweite Codiereinrichtung (114) als Transformationscodierer ausgeführt ist.

10. Verfahren zum Codieren eines Informationssignals, mit folgenden Merkmalen:
Codieren (102) des Informationssignals, um eine erste Skalierungsschicht zu erzeugen;
Decodieren (104) der ersten Skalierungsschicht, um ein codiertes/decodiertes Informationssignal zu erzeugen,
wobei durch den Schritt des Codierens (102) und/oder den Schritt des Decodierens (104) eine nicht-lineare frequenzabhängigen Phasenverzerrung eingeführt wird, um die das codierte/decodierte Informationssignal gegenüber dem Informationssignal phasenverzerrt ist;
Bilden eines Differenzsignals aus einem ersten Signal und einem zweiten Signal, wobei das Differenzsignal zum Erzeugen einer zweiten Skalierungsschicht codiert werden kann; und
Phasenverzerren mit einer nicht-linearen frequenzabhängigen Phasenverzerrung, die so gewählt ist, daß ein Phasenunterschied zwischen dem ersten Signal und dem zweiten Signal kleiner ist als die nicht-lineare frequenzabhängige Phasenverzerrung, die aufgrund des Schritts des Codierens und/oder des Schritts des Decodierens eingeführt wird,
wobei das erste Signal von einem Ausgangssignal, das im Schritt des Codierens erzeugt wird, abgeleitet wird, und wobei das zweite Signal das Informationssignal oder ein von dem Informationssignal abgeleitetes Signal ist.

11. Decodierer für einen Datenstrom mit einer ersten Skalierungsschicht und einer zweiten Skalierungsschicht, mit folgenden Merkmalen:
einer ersten Decodiereinrichtung (38) zum Decodieren der ersten Skalierungsschicht, um eine decodierte erste Skalierungsschicht zu erhalten;
einer zweiten Decodiereinrichtung (40) zum Decodieren der zweiten Skalierungsschicht, um eine decodierte zweite Skalierungsschicht zu erhalten;
einem Phasenverzerrer (44) zum Phasenverzerren der decodierten ersten Skalierungsschicht gemäß einem über der Frequenz nicht-linearen Phasengang, wobei der Phasengang so gewählt ist, daß eine in der decodierten ersten Skalierungsschicht vorhandene nicht-lineare frequenzabhängige Phasenverschiebung gegenüber der decodierten zweiten Skalierungsschicht verringert ist, um eine phasenverzerrte decodierte erste Skalierungsschicht zu erhalten; und
einer Einrichtung (46) zum Kombinieren der phasenverzerrten decodierten ersten Skalierungsschicht und der decodierten zweiten Skalierungsschicht, um ein decodiertes Informationssignal zu erhalten.

12. Verfahren zum Decodieren für einen Datenstrom mit einer ersten Skalierungsschicht und einer zweiten Skalierungsschicht, mit folgenden Schritten:
Decodieren der ersten Skalierungsschicht, um eine decodierte erste Skalierungsschicht zu erhalten;
Decodieren der zweiten Skalierungsschicht, um eine decodierte zweite Skalierungsschicht zu erhalten;
Phasenverzerren der decodierten ersten Skalierungsschicht gemäß einem über der Frequenz nicht-linearen Phasengang, wobei der Phasengang so gewählt ist, daß eine in der decodierten ersten Skalierungsschicht vorhandene nicht-lineare frequenzabhängige Phasenverschiebung gegenüber der decodierten zweiten Skalierungsschicht verringert ist, um eine phasenverzerrte decodierte erste Skalierungsschicht zu erhalten; und
Kombinieren der phasenverzerrten decodierten ersten Skalierungsschicht und der decodierten zweiten Skalierungsschicht, um ein decodiertes Informationssignal zu erhalten.

## Claims

1. Scalable encoder for encoding an information signal, comprising:
a first encoding means (102) for generating a first scaling layer from the information signal;
a decoding means (104), which is formed to decode the first scaling layer to generate an encoded/decoded information signal,
wherein a non-linear frequency-dependent phase distortion is introduced by the first encoding means (102) and/or the decoding means (104), by which the encoded/decoded information is phase distorted with respect to the information signal;
a comparator means (110) having two inputs (110a, 110b), wherein the comparator means (110) is formed to form a difference signal from a signal that can be applied to the first input (110a) and a signal that can be applied to the second input (110b), wherein the difference signal can be provided to a second encoding means (114) for generating a second scaling layer; and
a phase distorter (10a, 10b) for phase distorting with a non-linear frequency-dependent phase distortion which is selected such that a phase difference between the signal that can be applied to the first input (110a) and the signal that can be applied to the second input (110b) is smaller than the non-linear frequency-dependent phase distortion that is introduced due to the first encoding means and/or the decoding means,
wherein the signal that can be applied to the first input (110a) is derived from an output signal of the first encoding means (102) and wherein the signal that can be applied to the second input (110b) is the information signal or a signal derived from the information signal.

2. Scalable encoder according to claim 1,
wherein the phase distorter (10a) is disposed to phase-distort an input signal into the first encoding means and/or an output signal of the first decoding means (104) according to a phase response, which is selected in such a way that it results in a resulting phase response with a value of substantially 0 together with a phase response of the non-linear frequency-dependent phase distortion due to the first encoding means (102) and/or the first decoding means (104).

3. Scalable encoder according to claim 1,
wherein the phase distorter (10b) is disposed to phase-distort the information signal or a signal derived from the information signal according to a phase response, which is substantially equal to the phase response of the non-linear frequency-dependent phase distortion, which can be introduced by the first encoding means (102) and/or the first decoding means (104).

4. Scalable encoder according to one of the preceding claims,
wherein the phase distorter is realized as all-pass filter having a predetermined phase response and which has substantially no influence on a magnitude of the signal to be filtered.

5. Scalable encoder according to one of the preceding claims, further comprising.
a means (106) for generating a spectral representation of the encoded/decoded information signal; and
a means (114) for generating a spectral representation of the information signal or of an information signal derived from the information signal.

6. Scalable encoder according to claim 5, wherein the phase distorter (10a, 10b) acts on a spectral representation.

7. Scalable encoder according to one of the preceding claims, further comprising:
a means (105) for time-delaying the information signal by a period of time, which is substantially equal to a processing time of the first encoding means (102) and the decoding means (104).

8. Scalable encoder according to one of the preceding claims,
wherein the first encoding means (102) is limited to a frequency band and wherein the phase distorter (10a, 10b) is only effective in the frequency band to which the first encoding means (102) is band-limited.

9. Scalable encoder according to one of the preceding claims,
wherein the information signal comprises an audio signal and wherein the second encoding means (114) is embodied as conversion encoder.

10. Method for encoding an information signal, comprising:
encoding (102) the information signal to generate a first scaling layer;
decoding (104) the first scaling layer to generate an encoded/decoded information signal,
wherein by the step of encoding (102) and/or the step of decoding (104) a non-linear frequency-dependent phase distortion is introduced, by which the encoded/decoded information signal is phase-distorted with respect to the information signal;
forming a difference signal from a first signal and a second signal, wherein the difference signal can be encoded for generating a second scaling layer; and
phase-distorting with a non-linear frequency-dependent phase distortion, which is selected such that a phase difference between the first signal and the second signal is smaller than the non-linear frequency-dependent phase distortion that is introduced due to the step of encoding and/or the step of decoding,
wherein the first signal is derived from an output signal generated in the step of encoding, and wherein the second signal is the information signal or a signal derived from the information signal.

11. Decoder for a data stream having a first scaling layer and a second scaling layer, comprising:
a first decoding means (38) for decoding the first scaling layer to obtain a decoded first scaling layer;
a second decoding means (40) for decoding the second scaling layer to obtain a decoded second scaling layer;
a phase distorter (44) for phase-distorting the decoded first scaling layer according to a phase response, which is non-linear versus the frequency, wherein the phase response is selected such that a non-linear frequency-dependent phase distortion present in the decoded first scaling layer is reduced with respect to the decoded second scaling layer, to obtain a phase-distorted decoded first scaling layer; and
a means (46) for combining the phase distorted decoded first scaling layer and the decoded second scaling layer to obtain a decoded information signal.

12. Method for decoding for a data stream having a first scaling layer and a second scaling layer, comprising:
decoding the first scaling layer to obtain a decoded first scaling layer;
decoding the second scaling layer to obtain a decoded second scaling layer;
phase distorting the decoded first scaling layer according to a phase response that is non-linear versus the frequency, wherein the phase response is selected such that a non-linear frequency-dependent phase shift present in the decoded first scaling layer is reduced with respect to the decoded second scaling layer to obtain a phase distorted decoded first scaling layer; and
combining the phase-distorted decoded first scaling layer and the decoded second scaling layer to obtain a decoded information signal.

## Revendications

1. Codeur modulable pour le codage d'un signal d'information, aux caractéristiques suivantes :
un premier dispositif codeur (102) destiné à générer une première couche de modulation à partir du signal d'information ;
un dispositif décodeur (104), qui est réalisé pour décoder la première couche de modulation, afin de générer un signal d'information codé/décodé,
par le premier dispositif codeur (102) et/ou le dispositif décodeur (104) étant introduite une distorsion de phase non-linéaire fonction de la fréquence de laquelle est distorsionné en phase le signal d'information codé/décodé par rapport au signal d'information ;
un dispositif comparateur (110) avec deux entrées (110a, 110b), le dispositif comparateur (110) étant réalisé de manière à former un signal différentiel à partir d'un signal pouvant être appliqué à la première entrée (110a) et d'un signal pouvant être appliqué à la deuxième entrée (110b), le signal différentiel pouvant être alimenté vers un deuxième dispositif codeur (114) pour générer une deuxième couche de modulation ; et
un distorsionneur de phase (10a, 10b) destiné à la distorsion en phase avec une distorsion de phase non-linéaire fonction de la fréquence qui est choisie de sorte qu'une différence de phase entre le signal pouvant être appliqué à la première entrée (110a) et le signal pouvant être appliqué à la deuxième entrée (110b) soit plus petite que la distorsion de phase non-linéaire fonction de la fréquence qui est introduite du fait du premier dispositif de codage et/ou du dispositif de décodage,
le signal pouvant être appliqué à la première entrée (110a) étant dérivé d'un signal de sortie du premier dispositif codeur (102), et le signal pouvant être appliqué à la deuxième entrée (110b) étant le signal d'information ou un signal dérivé du signal d'information.

2. Codeur modulable selon la revendication 1, dans lequel le distorsionneur de phase (10a) est disposé de manière à distorsionner en phase un signal d'entrée dans le premier dispositif codeur et/ou un signal de sortie du premier dispositif décodeur (104) selon un angle de phase qui est choisi de sorte qu'il donne, ensemble avec un angle de phase de la distorsion de phase non-linéaire fonction de la fréquence, du fait du premier dispositif codeur (102) et/ou du premier dispositif de décodage (104), un angle de phase résultant d'une valeur de substantiellement 0.

3. Codeur modulable selon la revendication 1, dans lequel le distorsionneur de phase (10b) est disposé de manière à distorsionner en phase le signal d'information ou un signal dérivé du signal d'information selon un angle de phase qui est sensiblement égal à l'angle de phase de la distorsion de phase non-linéaire fonction de la fréquence qui peut être introduite par le premier dispositif codeur (102) et/ou le premier dispositif décodeur (104).

4. Codeur modulable selon l'une des revendications précédentes, dans lequel le distorsionneur de phase est réalisé sous forme de filtre passe-tout présentant un angle de phase prédéterminé, et qui n'a substantiellement pas d'influence sur une quantité du signal à filtrer.

5. Codeur modulable selon l'une des revendications précédentes, présentant, par ailleurs, les caractéristiques suivantes :
un dispositif (106) destiné à générer une représentation spectrale du signal d'information codé/décodé ; et
un dispositif (114) destiné à générer une représentation spectrale du signal d'information ou d'un signal d'information dérivé du signal d'information.

6. Codeur modulable selon la revendication 5, dans lequel le distorsionneur de phase (10a ; 10b) agit sur une représentation spectrale.

7. Codeur modulable selon l'une des revendications précédentes, présentant, par ailleurs, la caractéristique suivante :
un dispositif (105) destiné à retarder dans le temps le signal d'information d'une durée qui est sensiblement égale à une durée de traitement du premier dispositif codeur (102) et du dispositif décodeur (104).

8. Codeur modulable selon l'une des revendications précédentes, dans lequel le premier dispositif codeur (102) est limité à une bande de fréquences, et dans lequel le distorsionneur de phase (10a; 10b) n'est actif que dans la bande de fréquence à laquelle est limité en bande le premier dispositif codeur (102).

9. Codeur modulable selon l'une des revendications précédentes, dans lequel le signal d'information présente un signal audio, et dans lequel le deuxième dispositif codeur (114) est réalisé sous forme de codeur à transformation.

10. Procédé pour coder un signal d'information, aux caractéristiques suivantes :
coder (102) le signal d'information, pour générer une première couche de modulation ;
décoder (104) la première couche de modulation, pour générer un signal d'information codé/décodé,
par l'étape de codage (102) et/ou l'étape de décodage (104) étant introduite une distorsion de phase non-linéaire fonction de la fréquence de laquelle est distorsionné le signal d'information codé/décodé par rapport au signal d'information ;
former un signal différentiel à partir d'un premier signal et d'un deuxième signal, le signal différentiel pouvant être codé pour générer une deuxième couche de modulation ; et
distorsionner en phase avec une distorsion de phase non-linéaire fonction de la fréquence qui est choisie de sorte qu'une différence de phase entre le premier signal et le deuxième signal soit plus petite que la distorsion de phase non-linéaire fonction de la fréquence qui est introduite par suite de l'étape de codage et/ou de l'étape de décodage,
le premier signal étant dérivé d'un signal de sortie qui est généré à l'étape de codage, et le deuxième signal étant le signal d'information ou un signal dérivé du signal d'information.

11. Décodeur pour un flux de données avec une première couche de modulation et une deuxième couche de modulation, aux caractéristiques suivantes :
un premier dispositif décodeur (38) destiné à décoder la première couche de modulation, pour obtenir une première couche de modulation décodée ;
un deuxième décodeur (40) destiné à décoder la deuxième couche de modulation, pour obtenir une deuxième couche de modulation décodée ;
un distorsionneur de phase (44) destiné à distorsionner en phase la première couche de modulation décodée selon un angle de phase non-linéaire sur la fréquence, l'angle de phase étant choisi de sorte qu'un déphasage non-linéaire fonction de la fréquence présent dans la première couche de modulation décodée soit réduit par rapport à la deuxième couche de modulation décodée, pour obtenir une première couche de modulation décodée distorsionnée en phase ; et
un dispositif (46) destiné à combiner la première couche de modulation décodée distorsionnée en phase et la deuxième couche de modulation décodée, pour obtenir un signal d'information décodé.

12. Procédé pour décoder un flux de données avec une première couche de modulation et une deuxième couche de modulation, aux étapes suivantes consistant à :
décoder la première couche de modulation, pour obtenir une première couche de modulation décodée ;
décoder la deuxième couche de modulation, pour obtenir une deuxième couche de modulation décodée;
distorsionner en phase la première couche de modulation décodée selon un angle de phase non-linéaire sur la fréquence, l'angle de phase étant choisi de sorte qu'un déphasage non-linéaire fonction de la fréquence présent dans la première couche de modulation décodée soit réduit par rapport à la deuxième couche de modulation décodée, pour obtenir une première couche de modulation décodée distorsionnée en phase ; et
combiner la première couche de modulation décodée distorsionnée en phase et la deuxième couche de modulation décodée, pour obtenir un signal d'information décodé.
